# EUROPÄISCHE PATENTSCHRIFT

(11) **EP 1 088 053 B1**
(45) Veröffentlichungstag und Bekanntmachung des Hinweises auf die Patenterteilung: **18.08.2004**
(21) Anmeldenummer: 98965831.5
(22) Anmeldetag: 14.12.1998
(51) Int. Cl.: C12C 7/20, C12C 7/28

(54) **GEFÄSS UND VERFAHREN ZUR BEHANDLUNG VON WÜRZE BEI DER BIERHERSTELLUNG**
VESSEL AND WORT PROCESSING METHOD FOR PRODUCING BEER
CUVE ET PROCEDE DE TRAITEMENT DE MOUT DANS LA FABRICATION DE LA BIERE

(30) Priorität: 26.06.1998 DE 19828686
(43) Veröffentlichungstag der Anmeldung: 04.04.2001
(73) Patentinhaber: Anton Steinecker Maschinenfabrik GmbH, 85356 Freising-Attaching (DE)
(72) Erfinder: STIPPLER, Kurt, D-85417 Marzling (DE); WASMUHT, Klaus-Karl, D-92792 Ellingen (DE)
(74) Vertreter: Grünecker, Kinkeldey, Stockmair & Schwanhäusser Anwaltssozietät
(86) Internationale Anmeldenummer: PCT/EP1998/008185
(87) Internationale Veröffentlichungsnummer: WO 2000/000583

(56) Entgegenhaltungen:
- WO-A-99/13050
- DE-C- 538 073
- DE-C- 548 187
- DE-C- 19 539 509
- GB-A- 498 081
- US-A- 2 250 777
- US-A- 4 550 029

## Beschreibung

Die Erfindung betrifft ein Gefäß und ein Verfahren zur Behandlung von Würze bei der Bierherstellung.

Bei der Bierherstellung muss die Würze bekanntlich unterschiedlichen Behandlungsschritten unterzogen werden. Wichtig ist dabei der Würzekochprozess, in dem die durch den Läuterprozess gewonnene Würze gekocht und dann in irgendeiner Form Hopfen zugegeben wird. Das Kochen der Würze bezweckt das Verdampfen des überschüssigen Wassers zum Erzielen einer gewünschten Würzekonzentration, die Zerstörung der Enzyme und eine Sterilisierung der Würze, eine Ausscheidung gerinnbarer Eiweißstoffe und schließlich auch die Lösung der Hopfenwertbestandteile, vor allem der Bitterstoffe in der Würze.

Es ist außerdem bekannt, die Würze im Anschluss an die Würzepfanne in einen Whirlpooltank zu leiten, um den Heißtrub abzutrennen. Die Würze wird in dem Whirlpooltank heißgehalten. Schließlich kommen als weitere Behandlungsschritte auch das Einleiten der Würze nach der Würzepfanne in einen Entspannungskühler in Frage, in dem eine Abkühlung der Würze auf ca. 70 bis 75° stattfindet. Im Entspannungskühler kann z.B. mit Hilfe von Vakuum ein Austreiben vom DMS (Dimethylsulfid) erreicht werden.

Bei allen diesen Behandlungsschritten wird die Würze thermisch entweder durch Abkühlenlassen oder durch Erwärmen behandelt. Im allgemeinen setzt man zum Erwärmen Innen- oder Außenröhrenkocher ein, durch die die Würze geleitet wird. Zum Entspannen, d.h. zum Austreiben von Aromastoffen aus der Würze, hat man auch schon vorgeschlagen, die Würze von unten gegen einen Umlenkschirm zu leiten, so dass sich die Würze fächerartig in einem Gefäß ausbreitet und dabei Ausdampfen kann.

Aus der US-PS 4 550 029 ist ein Verfahren zum Würzekochen bekannt, bei dem die Würze in einer Kaskade stufenartig von einer oberen horizontalen Fläche durch Überlauf auf weiter darunter liegende Flächen fällt. In der Kaskade wird ein Heißdampfstrom erzeugt. Der heiße Dampf gibt seine Hitze an die herunterfallende Würze ab. Dadurch wird die Würze gekocht.

Der Erfindung liegt hiervon ausgehend die Aufgabe zugrunde, ein Gefäß und ein Verfahren vorzuschlagen, das an verschiedenen Stellen des Würzebehandlungsprozesses zur wirksamen Temperaturbehandlung der Würze eingesetzt werden kann.

Zur Lösung dieser Aufgabe schlägt die Erfindung ein Gefäß vor, in dem im Inneren ein Würzeleitschirm angeordnet ist, sowie eine oberhalb des Würzeleitschirms mündende Zulaufleitung zum Aufgeben der Würze von oben auf den Würzeleitschirm.

Mit einem solchen Gefäß ist es möglich, Würze, z.B. unmittelbar nach der Würzepfanne, von oben auf den Würzeleitschirm aufzugeben. Die Würze strömt dann entlang der Oberfläche des Würzeleitschirms nach unten und verteilt sich somit über eine große Fläche, so daß sie sich wirksam und schnell abkühlen kann, oder aber wenn der Würzeleitschirm, wie gemäß einer vorteilhaften Ausgestaltung vorgesehen, erwärmbar ist, auch großflächig erwärmt werden kann, was eine effektive Wärmeübertragung ermöglicht. Wenn im Anspruch von "im Inneren" die Rede ist, schließt das nicht aus, dass der Würzeleitschirm selbst zumindest zum Teil Bestandteil der Wandung des Würzeleitschirmes sein kann.

Wenn des Weiteren im Anspruch davon die Rede ist, dass die Würze von oben auf den Würzeleitschirm aufgegeben wird, so schließt dies mit ein, dass der Würzezulauf durch entsprechende Durchtritte im oberen Bereich des Würzeleitschirmes oder auch als Überlauf über eine obere Würzeleitfläche verwirklicht werden kann.

In vorteilhafter Ausgestaltung der Erfindung ist vorgesehen, daß der freie Zulaufquerschnitt der Würze auf dem Würzeleitschirm veränderbar ist. Durch Verändern des Zulaufquerschnitts lassen sich unterschiedliche Flüssigkeitsmengen pro Zeiteinheit über den Würzeleitschirm leiten, so daß die Leistung des Gefäßes veränderbar ist. Am einfachsten geschieht die Veränderung durch höhenverstellbare Ausführung der Zulaufleitung, so daß also die Mündung der Zulaufleitung abstandsveränderlich über dem Würzeleitschirm zu liegen kommt.

Wenn der Würzeleitschirm mit einer Heizeinrichtung versehen ist, läßt sich eine Erwärmung der Würze oder auch eine Beeinflussung der Abkühlgeschwindigkeit der Würze erzielen, wenn die gewählte Temperatur unterhalb der Aufgabetemperatur der Würze liegt. Beim Erwärmen der Würze, wie es z.B. beim Einsatz als Vorlaufgefäß erforderlich sein kann, wird ein sehr effektiver Wärmeübertrag erreicht, so daß sich eine gleichmäßige Erwärmung erreichen läßt.

Die Heizeinrichtung wird in bevorzugter Weise so verwirklicht, daß der Würzeleitschirm als doppelwandiger Schirm ausgebildet ist, durch dessen Innenraum Heißdampf oder ein anderes Heizmedium leitbar ist. In diesem Falle ist der Würzeleitschirm mit Anschlüssen zum Einleiten von Heißdampf und mit Abläufen zum Auslauf des Kondensats versehen.

In einer sehr vorteilhaften Ausgestaltung überdeckt der Würzeleitschirm wenigstens zwei Drittel der Grundfläche des Gefäßes, d.h., der Würzeleitschirm besitzt eine große Oberfläche, so daß eine entsprechende effektive Wärmebehandlung möglich ist.

Verwirklicht werden kann der Würzeleitschirm in bevorzugter Ausgestaltung mit einer Kegelform, wobei die Kegelspitze auf der Mittelachse des überlicherweise mit runder Querschnittsform hergestellten Gefäßes liegt und die Aufgabestelle für die Würze bildet. Von der Spitze weg verteilt sich die Würze dann über die gesamte Kegelfläche und kann so ausdampfen oder erwärmt werden.

Der Neigungswinkel des Würzeleitschirms zur Horizontalen beträgt bevorzugt zwischen 20 und 40°. Ein so gewählter Neigungswinkel stellt einerseits sicher, daß die Würze ausreichend gut abfließen kann, andererseits ist in diesem Bereich die Abfließgeschwindigkeit auch nicht zu groß, so daß sich ein ausreichend langer Verbleib auf dem Schirm und damit eine ausreichende Wärmebehandlungsmöglichkeit ergibt.

Wie bereits erwähnt, kann das Gefäß an verschiedenen Stellen zur Wärmebehandlung der Würze im Laufe des Bierherstellungsprozesses verwendet werden. So kann es z.B. als Ausdampfgefäß (Stripper) zwischen einer Würzepfanne oder Whirlpool -(Pfanne) einerseits und einem Plattenkühler andererseits geschaltet sein. Bei dieser Verwendung hat es den Zweck, daß unerwünschte Aromastoffe, z.B. DMS, aus der Würze ausgetrieben werden kann.

Bei einer anderen Anwendung wird das Gefäß als Vorlaufgefäß/-Pfanne mit einer Würzepfanne kombiniert. Dieses Vorlaufgefäß nimmt in bekannter Weise während des Würzekochens des vorausgehenden Suds abläutemde Würzemengen auf. Bei hohen Sudfolgen kann es dann erforderlich sein, die Würze im Vorlaufgefäß z.B. auf 90 bis 95°C aufzuheizen, um die Würzepfanne von diesem Zeitaufwand zu entlasten. Das erfindungsgemäße Gefäß eignet sich auch für diesen Zweck, wenn es, wie vorgeschlagen, mit einer Heizeinrichtung versehen ist. Dabei kann dann das Gefäß im Durchmesser auch auf eine Würze- und/oder Whirlpoolpfanne so angepaßt sein, daß es über der Pfanne angeordnet werden kann. Es gibt dann in diesem Falle Leitungssysteme, die ein Umpumpen von dem Gefäß in die Würzepfanne und zurück ermöglichen.

Schließlich ist es auch möglich, das Gefäß mit seiner Heizeinrichtung als Würzepfanne selbst einzusetzen.

Dabei kann das Gefäß auch mit einem Vorlaufgefäß kombiniert sein, so dass durch Umpumpen zwischen Vorlaufgefäß und Würzepfanne die Würze erhitzt werden kann. Herkömmliche Würzekochvorrichtungen wie z.B. Außen- oder Innenröhrenkocher erübrigen sich dann. Es hat sich hier insbesondere gezeigt, dass bei Einsatz eines erfindungsgemäß ausgestalteten Gefäßes mit einer Leitfläche über die die Würze großflächig, also in dünner Schicht zum Aufheizen geführt wird, sehr wirkungsvoll aufgeheizt werden kann und sich bedeutende Energieeinsparungspotentiale im Vergleich zu herkömmlichen Würzekochsystemen ergeben.

Der Würzeleitschirm kann in verschiedener Art und Weise verwirklicht werden. Insbesondere ist es möglich, ihn aus kaskardenartig übereinanderliegenden Leitflächen zu bilden oder als Kegelfläche mit Ausrichtung der Kegelspitze nach unten. Ebenfalls wäre es auch denkbar, den Würzeleitschirm als zylindrische Fläche zu verwirklichen, an deren Innenumfang die Würze in der Art einer Spirale nach unten laufend geführt wird. Der Würzeleitschirm im Sinne der Erfindung soll somit jede geneigte Leitfläche verstanden werden, über die die Würze zum Behandeln, insbesondere zum Aufheizen großflächig, d.h. mit geringer Schichtdicke geführt werden kann.

Die Würzeleitschirmoberfläche kann bevorzugt zur Verbesserung der Wärmeübertragung zumindest teilweise geriffelt oder wellenartig strukturiert ausgebildet sein. Eine Strukturierung der Oberfläche des Würzeleitschirmes sorgt für turbulente Strömungsverhältnisse, was zu einem noch besseren Wärmeübergang führt.

Die Aufgabe wird insbesondere auch durch ein Verfahren zur Würzekochung bei der Bierherstellung mit den Merkmalen des Anspruchs 16 gelöst.

Es hat sich herausgestellt, dass sich bei dieser Art der Würzekochung bedeutende verfahrenstechnische Vorteile erzielen lassen. Gegenüber herkömmlichen Kochverfahren konnte die Gesamtverdampfung deutlich reduziert werden, d.h. bis zu 60% Energieeinsparungen sind möglich. Auch verfahrenstechnologisch ergeben sich deutliche Verbesserungen der damit hergestellten Biere bei den Indikatoren für die Hitzebelastung, bei der Farbe, den DMS- und den TBZ-Werten.

Die Würzekochung wird bevorzugt in wenigstens zwei Phasen durchgeführt, wobei in der ersten Phase das Aufheizen der Würze durch Umpumpen über die beheizte Leitfläche und in der zweiten Phase das Kochen durch Umpumpen über die beheizte Leitfläche geschieht. An die eigentliche Kochphase (zweite Phase) kann sich ggf. unter Zwischenschaltung einer Ruhepause eine dritte Phase anschliessen, in der die Würze durch Umpumpen über die Leitfläche gestrippt wird (Ausdampfen unerwünschter Aromastoffe). Das Verfahren kann also so durchgeführt werden, dass die Würze sowohl zum Aufheizen als auch zum eigentlichen Kochen großflächig über dieselbe Leitfläche geführt wird, was konstruktiv und verfahrenstechnisch insgesamt zu einem einfachen Gesamtwürzekochprozess führt.

Während der ersten Phase (Aufheizen) kann die Würze mit größerer Umpumpmenge (Würzemenge pro Zeiteinheit) als während der zweiten Phase umgepumpt und damit über die Leitfläche geführt werden. Während der dritten Phase, in der das Strippen geschieht, wird die Umpumpmenge bevorzugt kleiner als während der ersten beiden Phasen gewählt.

Die der Leitfläche zugeführte Wärmemenge, bevorzugt in Form von Heißdampf, kann in der ersten Phase höher als in der zweiten Phase gewählt werden. Dies kann bevorzugt durch eine entsprechende Steuerung der Wärmemengenzufuhr, beispielsweise durch Einstellung unterschiedlicher Dampfdrücke oder Dampfmengen verwirklicht werden.

Es hat sich gezeigt, dass bei der Durchführung des Verfahrens die Schichtdicke des Würzestromes über der Leitfläche unter 20 mm betragen sollte, vorzugsweise jedoch zwischen 1 und 10 mm beträgt. Bevorzugte Fließgeschwindigkeiten der Würze über die Leitfläche liegen in einem Bereich von 0,2 m pro Sekunde bis 1 m pro Sekunde. Wird die Geschwindigkeit zu hoch gewählt, d.h. wird mit steilen Winkeln der Leitfläche gearbeitet, müssten die Heizflächen entsprechend groß dimensioniert werden, damit eine genügend lange Verweilzeit der Würze auf den Leitflächen für die Aufheizung gegeben ist. Bei zu langsamer Fließgeschwindigkeit kann es zu Überhitzungen der Würze kommen.

Die Erfindung wird im Folgenden anhand der Figuren und einer Tabelle weiter erläutert und beschrieben.

Dabei zeigt
- Figur 1: eine erste Ausführungsform eines erfindungsgemäßen Gefäßes zur Behandlung der Würze,
- Figur 2: ein zweites Ausführungsbeispiel in schematischer geschnittener Darstellung,
- Figur 3: eine schematische Darstellung eines dritten Ausführungsbeispiels eines Würzeleitschirmes,
- Figur 4: eine schematische Darstellung einer weiteren Ausführungsform eines Würzeleitschirmes,
- Figur 5: den grundsätzlichen Aufbau eines Würzekochsystems nach der Erfindung und die einzige
- Tabelle: einen Vergleich der mit dem erfindungsgemäßen Verfahren erzielbaren Werte mit einem herkömmlichen Verfahren.

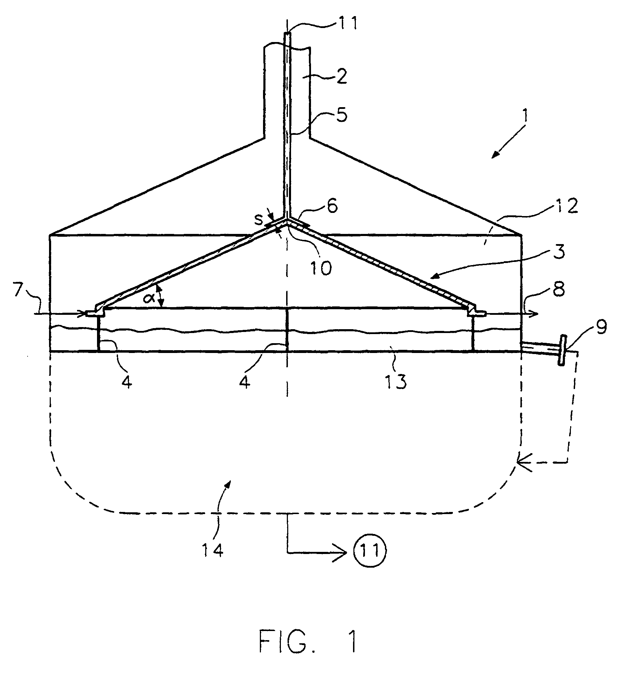

Das in Figur 1 dargestellte Gefäß ist insgesamt mit 1 bezeichnet und umfaßt ein in einen Gasaustritt 2 mündendes Oberteil sowie einen Innenraum 12, in dem ein Würzeleitschirm 3 angeordnet. Der Würzeleitschirm 3 schafft eine kegelförmige Fläche, die einen wesentlichen Teil des Bodens des Gefäßes abdeckt, also eine große Oberfläche aufweist. Dieser Leitschirm ist über Stützfüße 4 am Boden 13 abgestützt. Über der Spitze 10 des Würzeleitschirms mündet in einem Mündungskonus 6 die Zulaufleitung 5 für die zu behandelnde Würze. Die Zulaufleitung ist höhenverstellbar in nicht näher gezeigter Weise in dem Gefäß angeordnet, so daß sich der freie Öffnungsquerschnitt S zwischen Würzeleitschirmoberfläche und Öffnungskonus 6 verändern läßt.

Der Neigungswinkel α des Würzeleitschirmes 3 beträgt zwischen 20 und 40°.

In dem dargestellten Ausführungsbeispiel ist der Leitschirm als doppelwandiger Leitschirm ausgebildet, in dessen schraffiertem Innenraum Dampfkanäle verwirklicht sind, über die über eine Dampfzuleitung 7 Heißdampf zugeführt werden kann. Das Kondensat wird gesammelt und über einen Kondensatauslauf 8 abgeführt. Die sich unterhalb des Würzeleitschirmes sammelnde Würze kann über den Auslauf 9 abgeführt werden.

Das so konstruierte Gefäß kann in verschiedener Art. und Weise für die Würzebehandlung eingesetzt werden. Wird es als Vorlaufgefäß bzw. Heißhaltegefäß eingesetzt, so wird die Würze über den Einlauf 11 unmittelbar aus der Würzepfanne der Zulaufleitung 5 zugeführt. Der Zulaufquerschnitt S wird je nach zu verarbeitender Würzemenge geeignet eingestellt und die Würze gelangt dann über die Kegelfläche des Würzeleitschirmes 3 zum Boden des Gefäßes. Während des Herabfließens auf der Kegelfläche wird die Würze aufgeheizt, indem durch den Leitschirm Heißdampf strömt. Die Würze kann dann auf 90 bis 99°C erhitzt und in dem Gefäß gehalten werden. Ggf. kann auch ein Umpumpsystem vorgesehen sein, das die Würze aus dem Auslauf 9 entnimmt und über den Zulauf 11 wieder zuspeist, so daß im Kreislauf die Würze erhitzt bzw. warmgehalten werden kann.

Das Gefäß kann aber auch als Ausdampfgefäß, z.B. einem Plattenkühler vorgeschaltet sein. Dann wird der Leitschirm, ohne beheizt zu werden, als Kühlfläche verwendet. Durch die große geschaffene Oberfläche kann die aufgebrachte Würze wirkungsvoll störende Aromastoffe abdampfen, die dann über den Auslaß 2 entweichen. Ggf. kann vorgesehen sein, in diesem Zusammenhang das Gefäß auch unter einen leichten Unterdruck zu setzen, um die Ausdampfwirkung zu verbessern.

Das Gefäß kann als selbständig freistehendes Gefäß eingesetzt werden, es kann aber auch als kombinierbares Gefäß auf einer Würzepfanne, Whirlpool oder Whirlpoolpfanne aufgesetzt sein, die gestrichelt in der Zeichnung ebenfalls dargestellt und mit dem Bezugszeichen 14 versehen ist. Die Durchmesser sind dann entsprechend aufeinander abgestimmt und entsprechende Leitungssysteme vorhanden, um die Gefäße strömungsmäßig miteinander zu verbinden. Beispielsweise könnte der Auslauf des unteren Gefäßes, das beispielsweise eine Whirlpoolpfanne sein kann, mit dem Einlauf 11, wie angedeutet, des darüber liegenden Gefäßes verbunden sein.

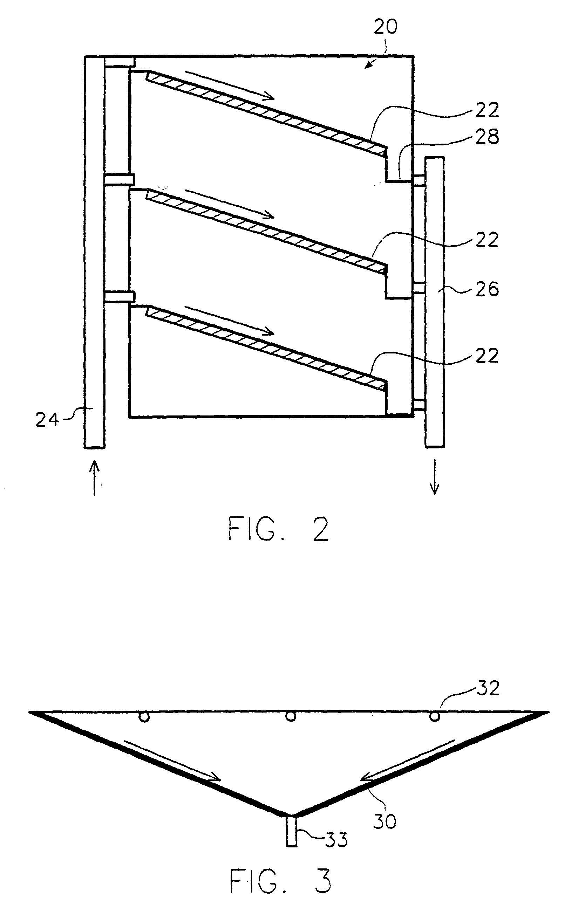

Der Würzeleitschirm des Gefäßes kann in verschiedener Art und Weise verwirklicht werden. Bei dem in Figur 2 dargestellten Ausführungsbeispiel ist das Gefäß insgesamt mit dem Bezugszeichen 20 bezeichnet. Im Inneren des Gefäßes befinden sich mehrere, kaskardenartig übereinander angeodnete, in der nicht dargestellten Draufsicht runde oder rechteckige Würzeleitflächen 22, die doppelwandig ausgebildet sind und im schraffiert dargestellten Innenraum mit Heißdampf durchströmt werden können, also beheizbar sind. Die zu erhitzende Würze gelangt über einen Zulaufverteiler 24 auf die verschiedenen Leitflächen 22, strömt dort entlang, wird dabei erhitzt und wird über die Sammelrinnen 28 einer Sammelleitung 26 zugeführt, um dann, je nach Verwendung des Gefäßes, beispielsweise zu einem Vorlaufgefäß verbracht zu werden und ggf. im Kreislauf umgepumpt zu werden, bis die gewünschte Behandlung der Würze, insbesondere die Kochung, abgeschlossen ist.

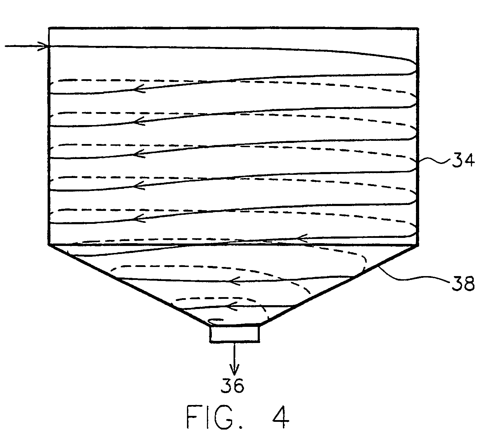

Figur 3 zeigt wiederum eine andere Variante, bei der der Würzeleitschirm als umgekehrter Konus 30 ausgestaltet ist, ebenfalls wieder mit nicht dargestellten Doppelwandungen zur Erwärmung. Die Zulaufleitungsmündungen 32 sind über den Umfang verteilt angeordnet und erlauben so die Zuführung der Würze. Die Mündungen können dabei auch tangential die Innenfläche anströmen, so dass die Würze in einer spiralförmigen Fließbewegung nach unten zum Auslauf 33 gelangt.

Bei dem in Figur 4 dargestellten Ausführungsbeispiel ist der Würzeleitschirm als Zylinder mit anschließend konisch zulaufendem Bodenteil 38 ausgebildet (und stellt somit das Gefäß selbst dar), an dessen Innenwand die Würze tangential angeströmt wird, so dass sie in der angedeuteten spiralförmigen Bewegung zum Auslauf 36 in die Konusspitze gelangt. Dieser Würzeleitschirm ist somit in der Art eines Zyklons ausgebildet. Entlang der Wandung können strömungsleitende, nicht näher dargestellte spiralförmig nach unten verlaufende Leitbleche angeordnet sein, die als Fließrinnen für die Würze dienen. Auch hier ist die Wandung wieder doppelwandig oder mit Heizflächen spiralförmig bestückt ausgebildet, so dass sie z.B. mit Heißdampf beaufschlagt werden kann.

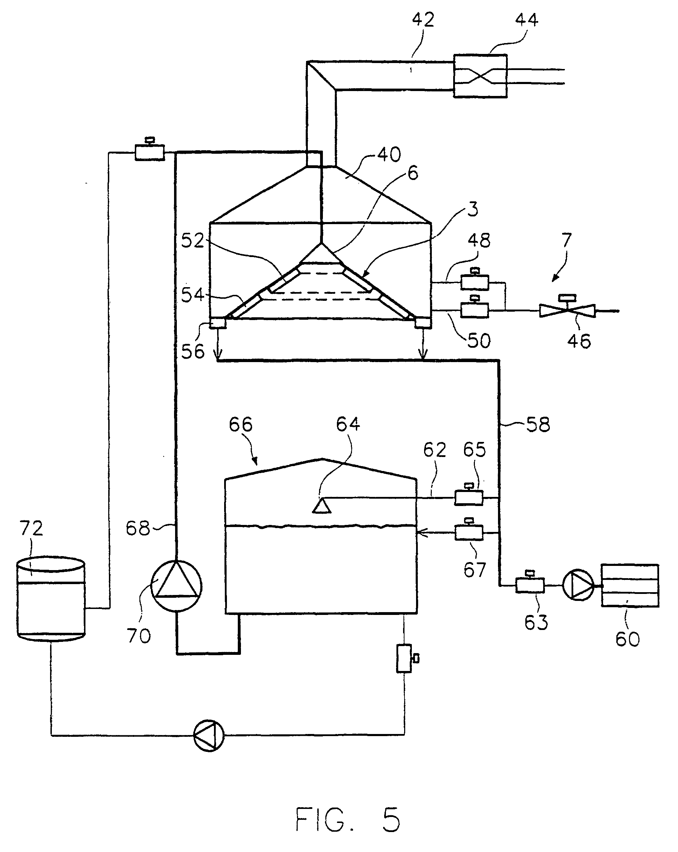

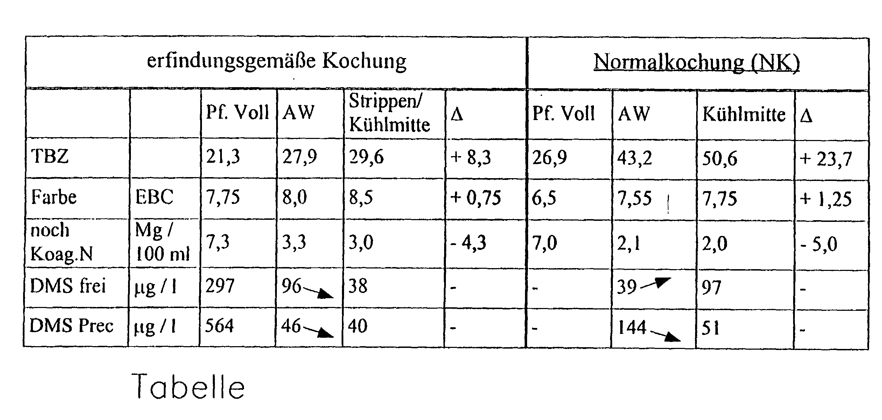

Mit einem erfindungsgemäß ausgestalteten Gefäß kann ein erfindungsgemäßes Verfahren zu einem kompletten Würzekochprozess mit einem System durchgeführt werden, wie es in Figur 5 dargestellt ist. Das erfindungsgemäße Gefäß dient dabei als Würzepfanne 40, an die in herkömmlicher Weise eine Brudendampfabzugsleitung 42 und ein Pfannendunstkondensator 44 angeschlossen sein kann. Im Inneren befindet sich der beheizbare Würzeleitschirm 3, dessen Doppelwandung in dem gezeigten Beispiel in die Dampfzufuhr 7 angeschlossen ist. Die Dampfzufuhr 7 umfasst ein Zulaufventil 46 sowie zwei stromabwärts davon liegende Zweige 48 und 50, die selektiv die beiden Zonen 52 und 54 des Würzeleitschirmes zu beheizen erlauben. Es können also bei diesem Ausführungsbeispiel verschiedene Flächenbereiche des Würzeleitschirmes auch mit unterschiedlichen Dampfdrücken und damit mit unterschiedlichen Temperaturen gefahren werden.

Am unteren Umfang des Würzeleitschirmes befindet sich ein umlaufender Sammelkanal 56, der in eine Leitung 58 mündet, die zum Plattenkühler 60 für die Würzekühlung führt. Von der Leitung 58 zweigen auch Leitungen 62 ab, die zurück in das Vorlaufgefäß 66 münden. Je nach Stellung der Ventile 63 bzw. 65 und 67 kann die Würze entweder zum Plattenkühler oder zurück in das Vorlaufgefäß geleitet werden. Aus dem Vorlaufgefäß kann die Würze mittels einer Pumpe 70 und einer Leitung 68 zurück in die Würzepfanne 40 geführt und über den Konus 6 auf den Würzeleitschirm 3 aufgegeben werden. An die Leitung 68 ist außerdem zur Hopfengabe das Hopfengabegefäß 72 angeschlossen, das für die Hopfengabe dem Kreislauf zugeschaltet werden kann.

Bei einem konkreten, in der Praxis durchgeführten Versuch wurde ein Würzeleitschirm mit einem Neigungswinkel α von 25° und einem Durchmesser von 3,50 m am unteren Ende (maximaler Durchmesser) für die Würzekochung eingesetzt. Zum Kochen einer üblichen Sudmenge von 110 hl, die vom nicht dargestellten Läuterbottich in das Vorlaufgefäß vorgelegt wird, wurde die Würze mit Hilfe der Pumpe 70 zum Aufheizen mit einer Umpumpmenge von 500 bis 550 hl pro Stunde im Kreislauf zwischen der Würzepfanne 40 und dem Vorlaufgefäß 66 umgepumpt. Die Würzeleitfläche 3 wurde mit einem Dampfdruck von 1,6 bis 2 bar beheizt. In einer Zeit von 25 bis 30 Minuten wurde die Würze insgesamt damit von ca. 72° auf 99° aufgeheizt. Die verdampfte Menge dabei betrugt ca. 1 bis 2 hl.

Dieser ersten Phase des Aufheizens schloß sich eine zweite Phase des Kochens an, wobei mit einer Umpumpmenge von 400 bis 430 hl pro Stunde gearbeitet wurde. Der Dampfdruck dabei betrug 1,0 bis 1,5 bar. In einer Zeit von 40 bis 50 Minuten wurde die Würze dabei gekocht. Die insgesamt verdampfte Menge während des Kochens betrug 1,5 bis 2,5 hl. Anschließend wurde die Würze ca. 10 bis 15 Minuten im Vorlaufgefäß, das auch als Whirlpool ausgebildet sein kann, belassen (Rast).

Danach wurde die Würze erneut über die Würzeleitfläche 3 umgepumpt jedoch mit geringeren Umpumpmengen von ca. 120 bis 130 hl pro Stunde. Der Dampfdruck, mit dem die Würze dabei beheizt wurde, betrug 0,3 bis 1,5 bar. Diese dritte Phase des Strippens, die insbesondere dem Austreiben des neu gebildeten DMS (Dimethylsulfid) dient, wurde entsprechend der Kühlzeit am Plattenkühler ca. 50 Minuten lang durchgeführt. Dabei verdampfte eine Menge von ca. 1 hl.

Die Gesamtverdampfungsmenge betrug damit ca. 4,5 hl, was einer Verdampfungsziffer von ca. 4 bis 4,1 % entspricht.

Diese niedrige Gesamtverdampfung bedeutet eine wesentliche Energieeinsparung von 40 bis 50% im konkreten Fall gegenüber der herkömmlichen Normalkochung mit Innenkocher. Eine Untersuchung des mit dem geschilderten Verfahren gekochten Bieres ergab Werte, wie sie in der einzigen Tabelle dargstellt sind. Der TBZ-Wert (Thiobarbitursäure-Zahl) stellt einen Indikator für die Hitzebelastung dar. Je geringer die Zunahme, desto besser ist die Geschmacksstabitität der fertigen Biere. Auch die gealterten Biere sind dann geschmacksstabiler. Bei dem erfindungsgemäß durchgeführten Verfahren fand eine Zunahme von nur 8,3 Einheiten statt, während die Zunahme bei vergleichbaren herkömmlichen Normalkochung mit innenkocher 23,7 Einheiten beträgt. Der Farbwert, der in etwa mit dem TBZ-Wert parallel läuft, ist ebenfalls günstiger als bei der herkömmlichen Kochung. Hier ist nur eine Zunahme von 0,75 gegenüber 1,25 bei der normalen Kochung festgestellt worden.

Der Wert für den noch koalgulierbaren Stickstoff sollte 1,5 bis 2,5 mg/100 ml betragen. in letzter Zeit werden aber Werte von > als 2,5 bis 3,0 als positiv für den Schaum angesehen. Je niedriger dieser Wert ist, desto intensiver ist die Kochung. Es zeigt sich auch hier, dass das erfindungsgemäße Verfahren bessere Werte zeigt.

Der freie DMS-Wert ist beim erfindungsgemäßen Verfahren bei einer Verdampfung von 3,5 bis 4% während des Kochens mit 96 µg/l sehr niedrig. Das Strippen (dritte Phase) reduziert den DMS-Wert noch weiter auf 0,38 µg/l Bei der Normalkochung von 39 auf 97 ist durch den DMS-Precursor-Zerfall während der Whirlpoolrast bedingt.

Schließlich ist der DMS-Precursor-Wert ein Indikator über die Güte der Kochung. Je niedriger dieser ist, desto weniger DMS kann sich noch frei nachbilden. Auch hier zeigt somit das erfindungsgemäße Verfahren bessere Werte.

Der hier erläuterte Vergleich mit der Normalkochung wurde gegenüber einem normalen Kochverfahren mit Innenkocher durchgeführt (annähernd gleiche Pfannenvollmenge), bei dem der Innenkocher mit 2,1 bar während der Zeit des Befüllens ca. 48 Minuten betrieben worden ist. Vom Ende des Befüllvorgangs bis zum Kochbeginn (12 Minuten) wurde der Innenkocher ebenfalls mit 2,1 bar weiter betrieben. In der ersten Kochphase erfolgte die Kochung mit 2 bar ca. 28 Minuten, wobei danach eine Rast bei 98° von 15 Minuten erfolgt ist. in der zweiten Kochphase, die ebenfalls mit 2 bar Dampfdruck durchgeführt wurde, wurde die Würze 30 bis 35 Minuten gekocht, danach erfolgte eine Rast im nachgeschalteten Whirlpool von 15 Minuten. Die dabei insgesamt verdampfte Menge betrug mehr als 8 hl, d.h. der Kochvorgang hat ca. 50% mehr Energie benötigt als bei Anwendung des erfindungsgemäßen Verfahrens.

Das erfindungsgemäße Gefäß zur Behandlung der Würze und das erfindungsgemäße Verfahren ermöglichen es somit, in einer neuen Art einen Würzebehandlungs-, insbesondere einen Würzekochprozess durchführen zu können. Der Einsatz des Gefäßes sowohl zum Aufheizen als auch zum Kochen als auch zum Strippen bietet nicht nur bedeutende Vorteile bei der Qualität der damit erzeugbaren Biere, sondern bringt eine bedeutende Energieeinsparung und eine Vereinfachung in konstruktiver Hinsicht der Anlagen für die Bierherstellung mit sich.

## Patentansprüche

1. Gefäß zur Behandlung von Würze bei der Bierherstellung,
**gekennzeichnet durch**
einen im Inneren angeordneten, mit einer Heizeinrichtung versehenen Würzeleitschirm (3, 22, 30, 34) und eine oberhalb des Würzeleitschirmes (3) mündende Zulaufleitung (5) zum Aufgeben der Würze von oben auf den Würzeleitschirm.

2. Gefäß nach Anspruch 1,
**dadurch gekennzeichnet, dass**
der freie Zulaufquerschnitt (S) der Würze auf den Würzeleitschirm veränderbar ist.

3. Gefäß nach Anspruch 2,
**dadurch gekennzeichnet, dass**
die Zulaufleitung (5) höhenverstellbar über dem Würzeleitschirm angeordnet ist.

4. Gefäß nach Anspruch 3,
**dadurch gekennzeichnet, dass**
der Würzeleitschirm (3, 22, 30, 34) als doppelwandiger Schirm ausgebildet ist, durch dessen Innenraum Heizmedium, z.B. Dampf leitbar ist.

5. Gefäß nach einem der Ansprüche 1 bis 4,
**dadurch gekennzeichnet, dass**
der Würzeleitschirm wenigstens zwei Drittel der Grundfläche des Gefäßes (1) abdeckt.

6. Gefäß nach einem der Ansprüche 1 bis 5,
**dadurch gekennzeichnet, dass**
der Würzeleitschirm kegelförmig ausgebildet ist.

7. Gefäß nach Anspruch 6,
**dadurch gekennzeichnet, dass**
der Neigungswinkel des Würzeleitschirmes zur Horizontalen zwischen 20 und 40° beträgt.

8. Gefäß nach einem der Ansprüche 1 bis 7,
**dadurch gekennzeichnet, dass**
es als Ausdampfgefäß zwischen eine Würzepfanne oder Whirlpool-(Pfanne) und einem Plattenkühler geschaltet ist.

9. Gefäß nach einem der Ansprüche 1 bis 7,
**dadurch gekennzeichnet, dass**
es als Vorlaufgefäß/-Pfanne mit einer Würzepfanne kombiniert ist.

10. Gefäß nach einem der Ansprüche 1 bis9,
**dadurch gekennzeichnet, dass**
er als Würzepfanne (40) vorzugsweise mit einem Vorlaufgefäß (66) kombiniert ist.

11. Gefäß nach Anspruch 1,
**dadurch gekennzeichnet, dass**
der Würzeleitschirm wenigstens zwei kaskadenartig übereinanderliegende Leitflächen (22) aufweist.

12. Gefäß nach Anspruch 1,
**dadurch gekennzeichnet, dass**
der Würzeleitschirm als Kegelfläche (30) mit Ausrichtung der Kegelspitze nach unten ausgebildet ist.

13. Gefäß nach Anspruch 1,
**dadurch gekennzeichnet, dass**
der Würzeleitschirm als zylindrische Fläche (34) ausgebildet ist, an deren Innenumfang die Würze in der Art einer Spirale nach unten laufend geführt wird.

14. Gefäß nach wenigstens einem der vorangehenden Ansprüche,
**dadurch gekennzeichnet, dass**
die Oberfläche des Würzeleitschirms zur Verbesserung der Wärmeübertragung zumindest teilweise geriffelt oder wellenartig strukturiert ausgebildet ist.

15. Verfahren zur Würzekochung bei der Bierherstellung,
**dadurch gekennzeichnet, dass**
die Würze auf eine geneigte, durch eine Heizeinrichtung beheizte Leitfläche aufgegeben, dort sich beim Herabströmen flächig verteilt und dabei erhitzt wird.

16. Verfahren nach Anspruch 15,
**dadurch gekennzeichnet, dass**
die Würze durch Umpumpen im Kreislauf über die Leitfläche geführt wird.

17. Verfahren nach Anspruch 15 oder 16,
**dadurch gekennzeichnet, dass**
die Würzekochung in wenigstens zwei Phasen durchgeführt wird, wobei die erste Phase das Aufheizen der Würze durch Umpumpen über die beheizte Leitfläche und die zweite Phase das Kochen durch Umpumpen über die beheizte Leitfläche umfasst.

18. Verfahren nach Anspruch 17,
**dadurch gekennzeichnet, dass**
sich an die zweite Phase gegebenenfalls unter Zwischenschaltung einer Ruhephase eine dritte Phase anschließt, in der die Würze durch Umpumpen über die Leitfläche gestrippt wird.

19. Verfahren nach einem der Ansprüche 15 bis 18,
**dadurch gekennzeichnet, dass**
während der ersten Phase die Umpumpmenge größer als während der zweiten Phase gewählt wird.

20. Verfahren nach Anspruch 18,
**dadurch gekennzeichnet, dass**
während der dritten Phase die Umpumpmenge kleiner als während der ersten beiden Phasen gewählt wird.

21. Verfahren nach wenigstens einem der Ansprüche 15 bis 20,
**dadurch gekennzeichnet, dass**
die der Leitfläche zugeführte Wärmemenge in der ersten Phase höher als in der zweiten Phase gewählt wird.

22. Verfahren nach Anspruch 21,
**dadurch gekennzeichnet, dass**
die Steuerung der Wärmemengenzufuhr durch Einstellung unterschiedlicher Dampfdrücke bei einer mit Heißdampf beheizten Leitfläche erfolgt.

23. Verfahren nach einem der Ansprüche 15 bis 22,
**dadurch gekennzeichnet, dass**
die Schichtdicke des Würzestromes über der Leitfläche weniger als 20 mm, vorzugsweise jedoch zwischen 1 und 10 mm beträgt.

24. Verfahren nach wenigstens einem der Ansprüche 15 bis 23,
**dadurch gekennzeichnet, dass**
sich die Fließgeschwindigkeit der Würze über aie Leitfläche in einem Bereich von 0.2 m/s bis 1m/s bewegt.

## Claims

1. A vessel for treating wort in beer brewing,
**characterized by**
a wort guiding screen (3, 22, 30, 34) arranged in the interior and provided with a heating means and by a feed pipe (5) ending above the wort guiding screen (3) for discharging wort from above onto the wort guiding screen.

2. The vessel according to claim 1,
**characterized in that**
the free feed cross-section (S) of the wort on the wort guiding screen is variable.

3. The vessel according to claim 2,
**characterized in that**
the feed pipe (5) is arranged to be vertically adjustable above the wort guiding screen.

4. The vessel according to claim 3,
**characterized in that**
the wort guiding screen (3, 22, 30, 34) is designed as a double-walled screen through the interior of which a heating medium, such as steam, can be guided.

5. The vessel according to any one of claims 1 to 4,
**characterized in that**
the wort guiding screen covers at least two thirds of the basic area of the vessel (1).

6. The vessel according to any one of claims 1 to 5,
**characterized in that**
the wort guiding screen is cone-shaped.

7. The vessel according to claim 6,
**characterized in that**
the angle of inclination of the wort guiding screen relative to the horizontal is between 20° and 40°.

8. The vessel according to any one of claims 1 to 7,
**characterized in that**
it is connected as an evaporation vessel between a wort kettle or whirlpool (kettle) and a plate cooler.

9. The vessel according to any one of claims 1 to 7,
**characterized in that**
it is combined as a pre-run vessel/kettle with a wort kettle.

10. The vessel according to any one of claims 1 to 9,
**characterized in that**
the vessel as a wort kettle (40) is preferably combined with a pre-run vessel (66).

11. The vessel according to claim 1,
**characterized in that**
the wort guiding screen comprises at least two guiding surfaces (22) that are superimposed in cascade-like fashion.

12. The vessel according to claim 1,
**characterized in that**
the wort guiding screen is designed as a conical surface (30) with a downward orientation of the tip of the cone.

13. The vessel according to claim 1,
**characterized in that**
the wort guiding screen is designed as a cylindrical surface (34) on the inner circumference of which the wort is guided in the manner of a spiral to run downwards.

14. The vessel according to at least one of the preceding claims,
**characterized in that**
the surface of the wort guiding screen is, at least in part, corrugated or has a waved structure for an improved transmission of heat.

15. A method for boiling wort in beer brewing,
**characterized in that**
the wort is discharged onto an inclined guiding surface heated by a heating means, on which it flows down and spreads into a sheet and is thereby heated.

16. The method according to claim 15,
**characterized in that**
the wort is guided over the guiding surface by being circulated by a pump.

17. The method according to claim 15 or 16,
**characterized in that**
wort boiling is carried out in at least two phases, the first phase comprising the heating up of wort by pumping over the heated guiding surface, and the second phase comprising boiling by pumping over the heated guiding surface.

18. The method according to claim 17,
**characterized in that**
the second phase is followed, optionally after a rest phase, by a third phase in which the wort is stripped by pumping over the guiding surface.

19. The method according to any one of claims 15 to 18,
**characterized in that**
in the first phase the pumping amount is chosen to be larger than in the second phase.

20. The method according to claim 19,
**characterized in that**
in the third phase the pumping amount is chosen to be smaller than in the first two phases.

21. The method according to at least one of claims 15 to 20,
**characterized in that**
the heat amount supplied to the guiding surface is chosen to be higher in the first phase than in the second phase.

22. The method according to claim 21,
**characterized in that**
the supply of the heat amount is controlled by adjusting different steam pressures in the case of a guiding surface heated with superheated steam.

23. The method according to any one of claims 15 to 22,
**characterized in that**
the layer thickness of the wort flow over the guiding surface is less than 20 mm, but preferably between 1 and 10 mm.

24. The method according to at least one of claims 15 to 23,
**characterized in that**
the flow rate of the wort over the guiding surface ranges from 0.2 m/s to 1 m/s.

## Revendications

1. Cuve pour le traitement de moût dans la fabrication de la bière, **caractérisée par** un écran déflecteur de moût (3, 22, 30, 34) disposé intérieurement, muni d'un dispositif de chauffage, et une conduite d'admission (5) débouchant au-dessus de l'écran déflecteur (3) pour le chargement du moût à partir du haut sur l'écran déflecteur.

2. Cuve suivant la revendication 1, **caractérisée en ce que** la section transversale libre d'admission (S) du moût sur l'écran déflecteur est modifiable.

3. Cuve suivant la revendication 2, **caractérisée en ce que** la conduite d'admission (5) est disposée avec possibilité de réglage en hauteur au-dessus de l'écran déflecteur de moût.

4. Cuve suivant la revendication 3, **caractérisée en ce que** l'écran déflecteur de moût (3, 22, 30, 34) est configuré sous forme d'écran à double paroi, au travers de l'espace intérieur duquel peut être envoyé un fluide de chauffage, par exemple de la vapeur.

5. Cuve suivant l'une des revendications 1 à 4, **caractérisée en ce que** l'écran déflecteur de moût recouvre au moins deux tiers de la surface de base de la cuve (1).

6. Cuve suivant l'une des revendications 1 à 5, **caractérisée en ce que** l'écran déflecteur de moût est configuré en forme de cône.

7. Cuve suivant la revendication 6, **caractérisée en ce que** l'angle d'inclinaison de l'écran déflecteur de moût par rapport à l'horizontale est compris entre 20 et 40°.

8. Cuve suivant l'une des revendications 1 à 7, **caractérisée en ce qu'**elle est montée en tant que cuve d'évaporation entre une chaudière à moût ou un (bac à) tourbillon et un refroidisseur à plaques.

9. Cuve suivant l'une des revendications 1 à 7, **caractérisée en ce qu'**elle est combinée en tant que cuve/bac primaire à une chaudière à moût.

10. Cuve suivant l'une des revendications 1 à 9, **caractérisée en ce qu'**elle est combinée en tant que chaudière à moût (40) de préférence à une cuve primaire (66).

11. Cuve suivant la revendication 1, **caractérisée en ce que** l'écran déflecteur de moût présente au moins deux surfaces de guidage (22) superposées en cascade.

12. Cuve suivant la revendication 1, **caractérisée en ce que** l'écran déflecteur de moût est configuré sous forme de surface conique (30) avec orientation de la pointe du cône vers le bas.

13. Cuve suivant la revendication 1, **caractérisée en ce que** l'écran déflecteur de moût est configuré sous forme de surface cylindrique (34), sur le pourtour intérieur de laquelle le moût est guidé en continu vers le bas à la manière d'une spirale.

14. Cuve suivant l'une au moins des revendications précédentes, **caractérisée en ce que** la surface de l'écran déflecteur de moût a au moins en partie une configuration de structure striée ou ondulée pour améliorer le transfert thermique.

15. Procédé d'ébullition de moût dans la fabrication de la bière, **caractérisé en ce que** le moût est chargé sur une surface de guidage inclinée chauffée par un dispositif de chauffage, s'y répartit en nappe lors de son écoulement vers le bas et est ainsi chauffé.

16. Procédé suivant la revendication 15, **caractérisé en ce que** le moût est conduit par transvasement en circuit fermé par l'intermédiaire de la surface de guidage.

17. Procédé suivant l'une des revendications 15 et 16, **caractérisé en ce que** l'ébullition du moût est réalisée en au moins deux phases, la première phase comprenant le chauffage du moût par transvasement par l'intermédiaire de la surface de guidage chauffée et la deuxième phase l'ébullition par transvasement par l'intermédiaire de la surface de guidage chauffée.

18. Procédé suivant la revendication 17, **caractérisé en ce que** la deuxième phase est suivie, éventuellement avec intercalation d'une phase de repos, d'une troisième phase dans laquelle le moût est épuisé par transvasement par l'intermédiaire de la surface de guidage.

19. Procédé suivant l'une des revendications 15 à 18, **caractérisé en ce que** la quantité transvasée est choisie plus grande pendant la première phase que pendant la deuxième phase.

20. Procédé suivant la revendication 18, **caractérisé en ce que** la quantité transvasée est choisie plus petite pendant la troisième phase que pendant les deux premières phases.

21. Procédé suivant l'une au moins des revendications 15 à 20, **caractérisé en ce que** la quantité de chaleur fournie à la surface de guidage est choisie plus élevée dans la première phase que dans la deuxième phase.

22. Procédé suivant la revendication 21, **caractérisé en ce que** la commande de l'apport des quantités de chaleur est assurée par réglage de pressions de vapeur différentes pour une surface de guidage chauffée par de la vapeur surchauffée.

23. Procédé suivant l'une des revendications 15 à 22, **caractérisé en ce que** l'épaisseur de couche du flux de moût sur la surface de guidage est inférieure à 20 mm, mais est de préférence comprise entre 1 et 10 mm.

24. Procédé suivant l'une au moins des revendications 15 à 23, **caractérisé en ce que** la vitesse d'écoulement du moût sur la surface de guidage se déplace dans une plage de 0,2 m/s à 1 m/s.
